# EUROPEAN PATENT APPLICATION

(11) **EP 4 678 330 A1**
(43) Date of publication of application: **14.01.2026**
(21) Application number: 24771100.5
(22) Date of filing: 05.03.2024
(51) Int. Cl.: B23K 26/067, B23K 26/06, B23K 26/364, B23K 26/382, B23K 101/40

(54) **LASER PROCESSING DEVICE AND LASER BEAM FORMING METHOD USING SAME**

(30) Priority: 10.03.2023 KR 20230031833
(71) Applicant: EO Technics Co., Ltd., Anyang-si, Gyeonggi-do 13930 (KR)
(72) Inventor: LEE, Hee Chul, Gunpo-si, Gyeonggi-do 15801 (KR); KIM, Byung Oh, Gunpo-si, Gyeonggi-do 15809 (KR); KANG, Yoon Shik, Seongnam-si, Gyeonggi-do 13469 (KR); MOON, Eun Kyong, Anyang-si, Gyeonggi-do 14116 (KR)
(74) Representative: Westphal, Mussgnug & Partner Patentanwälte mbB
(86) International application number: PCT/KR2024/002784
(87) International publication number: WO 2024/191100

(57) **Abstract**

A laser processing apparatus is disclosed. The laser processing apparatus comprises: a light source configured to provide a laser beam; a beam expander comprising a birefringent material configured to birefringe the laser beam to form a first laser beam polarized in a first direction and a second laser beam polarized in a second direction perpendicular to the first direction; and a focusing lens configured to focus the first laser beam and the second laser beam onto a workpiece, wherein the first laser beam and the second laser beam are focused at different depths from a surface of the workpiece.

## Description

### [Technical Field]

The present invention relates to a laser processing apparatus and a method of forming a laser beam using the same

### [Background Art]

A laser processing apparatus refers to a device that performs grooving, scribing, drilling, dicing, or cutting on a workpiece such as a wafer using a laser beam. Since it is necessary to process the surface to a depth of 10-20 um or more depending on the type of wafer, the greater the depth of focus of the laser processing apparatus, the more advantageous it is. This is because if the depth of focus is insufficient, a beam of uniform size cannot be irradiated onto the wafer due to height variations of the workpiece, equipment vibration, etc., which ultimately leads to deterioration of processing quality.

As a method to increase the depth of focus, attempts have been made to increase the focal length of the focusing lens, but this had the problem of increasing the diffraction limit and degrading the quality of the processing beam.

Therefore, there is a need for technology that can increase the depth of focus without degrading the quality of the processing beam.

### [Detailed Description of the Invention]

### [Technical Problem]

One technical problem to be solved by the present invention is to provide a laser processing apparatus that can increase the depth of focus without degrading the quality of the processing beam.

Another technical problem to be solved by the present invention is to provide a laser processing apparatus that can improve processing speed by forming multiple focuses.

Another technical problem to be solved by the present invention is to provide a laser processing apparatus that can reduce the size of a laser beam while minimizing loss of the laser beam.

### [Technical Solution]

According to an embodiment of the present invention, there may be provided a laser processing apparatus comprising: a light source configured to provide a laser beam; a beam expander comprising a birefringent material configured to birefringe the laser beam to form a first laser beam polarized in a first direction and a second laser beam polarized in a second direction perpendicular to the first direction; and a focusing lens configured to focus the first laser beam and the second laser beam onto a workpiece, wherein the first laser beam and the second laser beam are focused at different depths from a surface of the workpiece.

The beam expander may comprise: a birefringent lens configured to receive the laser beam and form the first laser beam and the second laser beam; a concave lens configured to refract the first laser beam and the second laser beam; and a convex lens configured to refract the first laser beam and the second laser beam that have passed through the concave lens.

The birefringent lens may be a plano-convex lens comprising a planar surface and a convex surface, and the laser beam may be incident perpendicular to the planar surface.

A distance between the first laser beam and the second laser beam incident on the concave lens may be smaller than a distance between the first laser beam and the second laser beam incident on the convex lens.

The beam expander may comprise: a first lens configured to receive the laser beam and refract the received laser beam in a converging direction; a birefringent plate configured to receive the laser beam that has passed through the first lens and form the first laser beam and the second laser beam; and a second lens configured to refract the first laser beam and the second laser beam.

A focal point of the laser beam may be formed between the first lens and the birefringent plate.

The first laser beam and the second laser beam may intersect inside the beam expander.

The laser processing apparatus may further comprise: a diffractive optical element (DOE) positioned between the beam expander and the focusing lens and configured to convert the first laser beam and the second laser beam emitted from the beam expander into flat-top beams.

The laser processing apparatus may further comprise: a wave plate configured to change a polarization direction of the laser beam such that the polarization direction of the laser beam forms an angle of 45 degrees with an optical axis of the birefringent material.

A difference in size between the first laser beam and the second laser beam focused on the workpiece may be within a predetermined range.

A distance between a first focal plane where the first laser beam is focused and a second focal plane where the second laser beam is focused may be 10 um or more.

The birefringent material may have positive birefringence.

The first laser beam and the second laser beam imaged on the workpiece may have a rectangular beam shape with a major axis length that is at least 9 times greater than a minor axis length.

According to an embodiment of the present invention, there may be provided a method of forming a laser beam using a laser processing apparatus that includes a light source, a beam expander comprising a birefringent material, and a focusing lens, the method comprising: directing a laser beam provided from the light source to be incident on the beam expander; forming, by using the beam expander to birefringe the laser beam, a first laser beam polarized in a first direction and a second laser beam polarized in a second direction perpendicular to the first direction; and focusing, by using the focusing lens, the first laser beam and the second laser beam onto a workpiece, wherein the first laser beam and the second laser beam are focused at different depths from a surface of the workpiece.

The beam expander may further comprise a birefringent lens, a concave lens, and a convex lens. The forming of the first laser beam and the second laser beam may comprise: receiving the laser beam using the birefringent lens to form the first laser beam and the second laser beam; refracting the first laser beam and the second laser beam using the concave lens; and refracting the first laser beam and the second laser beam that have passed through the concave lens using the convex lens.

The beam expander may further comprise a first lens, a birefringent plate, and a second lens. The forming of the first laser beam and the second laser beam may comprise: receiving the laser beam using the first lens and refracting the received laser beam in a converging direction; receiving the laser beam that has passed through the first lens using the birefringent plate to form the first laser beam and the second laser beam; and refracting the first laser beam and the second laser beam using the second lens.

### [Advantageous Effects of Invention]

The disclosed technology may have the following effects. However, this does not mean that a specific embodiment must include all of the following effects or only the following effects, so the scope of the disclosed technology should not be understood as being limited thereby.

According to an embodiment of the present invention, by forming multiple focuses using two laser beams having polarization directions perpendicular to each other, the depth of focus can be increased without energy loss and degradation of processing beam quality.

According to an embodiment of the present invention, processing amount per unit time and processing speed can be improved by using multi-beams.

The above description of the invention does not include a complete list of all aspects of the present invention. The present invention should be understood to include all methods, devices, and systems that can be implemented from all appropriate combinations of various aspects disclosed in the above summary as well as in the following detailed description and claims. In addition, effects that can be obtained or predicted from the embodiments of the present invention will be disclosed directly or implicitly in the detailed description of the embodiments of the present invention. For example, various effects predicted according to the embodiments of the present invention will be disclosed in the detailed description to be described later.

### [Brief Description of Drawings]

Aspects, features and advantages of specific embodiments of the present invention will become clearer through the following description with reference to the accompanying drawings.
FIG. 1 is a schematic diagram of a laser processing apparatus (1) according to an embodiment of the present invention.
FIG. 2 is a schematic diagram of a laser processing apparatus (1) according to an embodiment of the present invention.
FIG. 3 is a schematic diagram of a laser processing apparatus (1) according to another embodiment of the present invention.
FIG. 4 is a table showing transmission patterns and multi-focus spacing of a birefringent plate (135) according to an incident angle of a laser beam (L) according to an embodiment of the present invention.
FIG. 5 is a diagram for explaining a method of forming a first laser beam (L1) and a second laser beam (L2) according to an embodiment of the present invention.
FIG. 6 shows laser beams irradiated onto a workpiece according to an embodiment of the present invention.
FIG. 7a is experimental data for a laser beam according to an embodiment of the present invention.
FIG. 7b is experimental data for a laser beam according to an embodiment of the present invention.
FIG. 7c is experimental data for a laser beam according to an embodiment of the present invention.
FIG. 8 is experimental data for a laser beam according to an embodiment of the present invention.
FIG. 9 is experimental data showing images of two laser beams according to the relationship of polarization directions of the two laser beams.

### [Mode for Carrying Out the Invention]

Terms used herein will be briefly described, and the present invention will be described in detail.

Terms used in the embodiments of the present invention have been selected from currently widely used general terms as much as possible while considering the functions in the present invention, but these may vary depending on the intention of those skilled in the art, precedents, or the emergence of new technologies. In addition, in specific cases, there are terms arbitrarily selected by the applicant, and in this case, their meanings will be described in detail in the corresponding description of the disclosure. Therefore, the terms used in the present invention should be defined based on the meanings of the terms and the overall content of the present invention, rather than simply the names of the terms.

The embodiments of the present invention may be subject to various modifications and may have various embodiments, and specific embodiments will be illustrated in the drawings and described in detail in the detailed description. However, this is not intended to limit the scope to specific embodiments, and should be understood to include all modifications, equivalents, and substitutes included in the disclosed spirit and technical scope. When it is determined that detailed descriptions of related known technologies may obscure the gist in describing the embodiments, the detailed descriptions thereof will be omitted.

Terms such as first, second, etc. may be used to describe various components, but the components should not be limited by the terms. The terms are used only for the purpose of distinguishing one component from another component.

Singular expressions include plural expressions unless the context clearly indicates otherwise. In this application, terms such as "comprise" or "consist of" are intended to designate the existence of features, numbers, steps, operations, components, parts, or combinations thereof described in the specification, and should not be understood to preclude the possibility of the existence or addition of one or more other features, numbers, steps, operations, components, parts, or combinations thereof.

Hereinafter, embodiments of the present invention will be described in detail so that those skilled in the art to which the present invention pertains can easily implement them with reference to the accompanying drawings. However, the present invention may be implemented in various different forms and is not limited to the embodiments described herein. In the drawings, parts not related to the description are omitted for clarity of explanation of the present invention, and similar reference numerals are attached to similar parts throughout the specification.

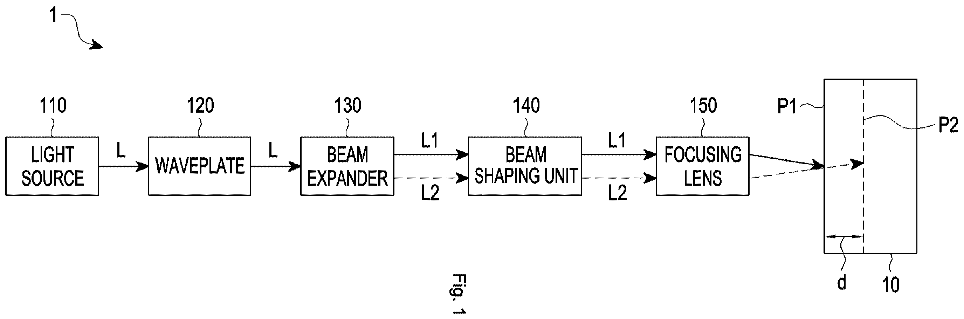

FIG. 1 is a schematic diagram of a laser processing apparatus according to an embodiment of the present invention.

Referring to FIG. 1, the laser processing apparatus (1) may include a light source (110), a wave plate (120), a beam expander (130), a beam shaping unit (140), and an imaging unit (150). The laser processing apparatus (1) may process a workpiece (10) using laser beams (L1, L2). For example, the laser processing apparatus (1) may groove or scribe the workpiece (10) using the laser beams (L1, L2). The workpiece (10) may be a wafer or an ABF (Ajinomoto Build-up Film) substrate.

The light source (110) may generate a laser beam (L). The laser beam (L) may be a Gaussian beam. Alternatively, the laser beam (L) may be a flat-top beam. The light source (110) may output the laser beam (L). The light source (110) may transmit the laser beam (L) to the wave plate (120).

The wave plate (120) may change the polarization direction of the laser beam (L). The wave plate (120) may adjust the polarization direction of the laser beam (L) so that the polarization direction of the laser beam (L) forms a predetermined angle (for example, 45 degrees) with the optical axis of the birefringent material included in the beam expander (130). The wave plate (120) may be a half wave plate (HWP).

The beam expander (130) may receive the laser beam (L) that has passed through the wave plate (120). The beam expander (130) may form a first laser beam (L1) and a second laser beam (L2) from the laser beam (L). The beam expander (130) may birefringe the laser beam (L) to form the first laser beam (L1) and the second laser beam (L2). The laser beam (L) incident on the beam expander (130) may be birefringed while passing through the beam expander (130) and split into the first laser beam (L1) and the second laser beam (L2). The first laser beam (L1) may be an ordinary ray (o-ray), and the second laser beam (L2) may be an extraordinary ray (e-ray). Conversely, the first laser beam (L1) may be an extraordinary ray and the second laser beam (L2) may be an ordinary ray.

The polarization direction of the first laser beam (L1) may be a first direction. The polarization direction of the second laser beam (L2) may be a second direction perpendicular to the first direction. Therefore, the first laser beam (L1) and the second laser beam (L2) may not interfere with each other. In other words, there may be no coherence between the first laser beam (L1) and the second laser beam (L2). Energy loss due to interference between the first laser beam (L1) and the second laser beam (L2) may not occur. The first direction and the second direction may form 45 degrees with the polarization direction of the laser beam (L).

The beam expander (130) may include a birefringent material, a concave lens, and a convex lens. The birefringent material may be a birefringent lens or a birefringent plate. The birefringent material may have positive birefringence or negative birefringence. The beam expander (130) may be implemented as a BET (Beam Expander Telescope). The birefringent lens may be a plano-convex lens having a planar surface and a convex surface. The birefringent plate may have planar surfaces. In one embodiment, the beam expander (130) may consist of a birefringent material, a concave lens, and a convex lens. In another embodiment, the beam expander (130) may consist of a birefringent material and two convex lenses. In yet another embodiment, the beam expander (130) may consist of a birefringent material, a plurality of concave lenses, and a plurality of concave lenses.

The beam shaping unit (140) may shape or form the shape of the first laser beam (L1) and the second laser beam (L2). The beam shaping unit (140) may convert the first laser beam (L1) and the second laser beam (L2) into flat-top beams. The first laser beam (L1) and the second laser beam (L2) may be transformed from Gaussian beams to flat-top beams by the beam shaping unit (140). The beam shaping unit (140) may include a diffractive optical element (DOE). The beam shaping unit (140) may include an aspherical lens.

The imaging unit (150) may image the first laser beam (L1) and the second laser beam (L2) onto the workpiece (10). The imaging unit (150) may image the first laser beam (L1) onto a first imaging plane (P1). The focal point of the first laser beam (L1) may be formed at the first imaging plane (P1). The first imaging plane (P1) may be the surface of the workpiece (10). The imaging unit (150) may image the second laser beam (L2) onto a second imaging plane (P2). The focal point of the second laser beam (L2) may be formed at the second imaging plane (P2). The distance (d) between the first imaging plane (P1) and the second imaging plane (P2) may be 10 um or more. That is, the distance between the focal point of the first laser beam (L1) and the focal point of the second laser beam (L2) may be 10 um or more. The imaging unit (150) may include at least one lens. The imaging unit (150) may include a focusing lens.

The laser processing apparatus (1) may generate multi-beams (L1, L2) from one laser beam (L). The laser processing apparatus (1) may increase the depth of focus (DOF) of the laser beam (L) by multi-focusing the multi-beams (L1, L2) onto two imaging planes (P1, P2). When the distance (d) between the first imaging plane (P1) and the second imaging plane (P2) is 10 um or more, the depth of focus (DOF) may increase by 10 um or more. Since the first laser beam (L1) and the second laser beam (L2) do not interfere with each other, independent imaging quality can be maintained.

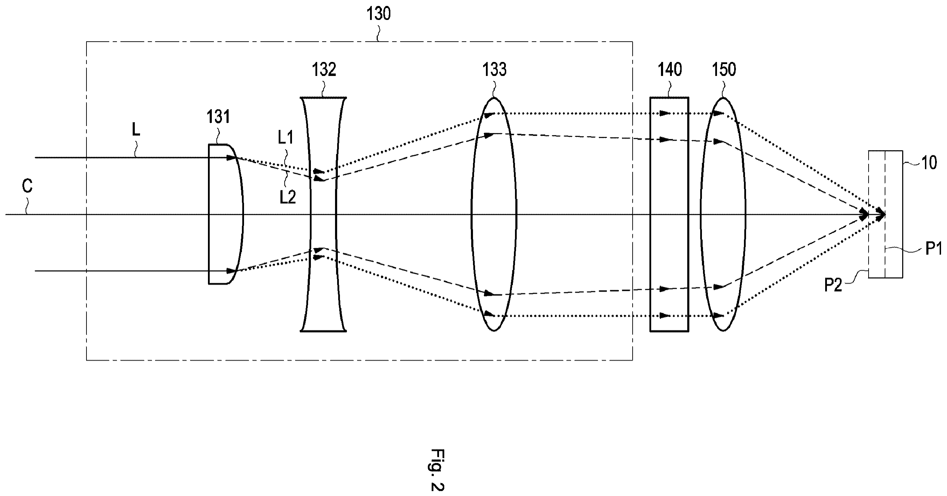

FIG. 2 is a schematic diagram of a laser processing apparatus (1) according to an embodiment of the present invention.

Referring to FIG. 2, the laser processing apparatus (1) may include a beam expander (130), a beam shaping unit (140), and an imaging unit (150). The beam expander (130) may include a birefringent lens (131), a concave lens (132), and a convex lens (133). The beam shaping unit (140) may be a diffractive optical element (DOE). The imaging unit (150) may be a focusing lens.

The beam expander (130) may receive a laser beam (L). The laser beam (L) may be output from the light source (110), pass through the wave plate (120), and then be incident on the beam expander (130). The laser beam (L) may be incident perpendicular to the planar surface of the birefringent lens (131).

The beam expander (130) may generate and output a first laser beam (L1) and a second laser beam (L2) from the laser beam (L). The beam expander (130) may form the first laser beam (L1) and the second laser beam (L2) using the birefringent lens (131). Due to the birefringent property of the birefringent lens (131), the laser beam (L) passing through the birefringent lens (131) may split into the first laser beam (L1) and the second laser beam (L2). For example, the first laser beam (L1) may be an ordinary ray, and the second laser beam (L2) may be an extraordinary ray.

The polarization direction of the first laser beam (L1) and the polarization direction of the second laser beam (L2) may be perpendicular. For example, when the polarization direction of the laser beam (L) forms 45 degrees with the optical axis of the birefringent lens (131), the polarization direction of the first laser beam (L1) and the polarization direction of the second laser beam (L2) may be perpendicular. When the polarization direction of the first laser beam (L1) and the polarization direction of the second laser beam (L2) are perpendicular, interference between the first laser beam (L1) and the second laser beam (L2) may not occur. Therefore, energy loss due to interference between the first laser beam (L1) and the second laser beam (L2) can be prevented.

The distance between the two beams (L1, L2) output by the beam expander (130) can determine the distance between the focal points of the two beams (L1, L2) (i.e., the depth of focus). The distance between the two beams (L1, L2) can be determined based on the birefringent lens (131), the concave lens (132), and the convex lens (133). The distance between the two beams (L1, L2) can be adjusted according to the size or refractive index of the birefringent lens (131), the concave lens (132), and the convex lens (133). For example, the distance between the two beams (L1, L2) within the beam expander (130) may increase along the propagation direction of the two beams (L1, L2). The concave lens (132) and the convex lens (133) can increase the depth of focus by increasing the distance between the two beams (L1, L2).

The beam shaping unit (140) may shape the two beams (L1, L2) to have a predetermined size or shape. The beam shaping unit (140) may shape the two beams (L1, L2) into flat-top beams. The beam shaping unit (140) may shape the two beams (L1, L2) to have a rectangular shape with different lengths in the horizontal and vertical directions. For example, at the imaging plane, the two beams (L1, L2) may have a major axis length of 50 µm and a minor axis length of 5 µm. At the imaging plane, the two beams (L1, L2) may have a rectangular beam shape where the major axis length is at least 9 times greater than the minor axis length.

The imaging unit (150) may image the two beams (L1, L2) onto the workpiece (10) respectively. The imaging unit (150) may image the first laser beam (L1) onto the first imaging plane (P1). The focal point of the first laser beam (L1) may be formed at the first imaging plane (P1). The first imaging plane (P1) may be inside the workpiece (10). The imaging unit (150) may image the second laser beam (L2) onto the second imaging plane (P2). The focal point of the second laser beam (L2) may be formed at the second imaging plane (P2). The second imaging plane (P2) may be the surface of the workpiece (10). The distance between the focal point of the first laser beam (L1) and the focal point of the second laser beam (L2) may be 10 µm or more. That is, the depth of focus of the laser beam (L) may increase by 10 µm or more. Therefore, even if the depth of the workpiece (10) varies, a beam with uniform characteristics (e.g., energy, size, shape, etc.) can be irradiated onto the workpiece (10). In addition, the processing speed.

The central axes of the birefringent lens (131), the concave lens (132), and the convex lens (133) may be positioned on the same axis (C). Accordingly, a compact design of the beam expander (130) is possible. The central axes of the beam shaping unit (140) and the imaging unit (150) may be positioned on the same axis (C) as the central axes of the birefringent lens (131), the concave lens (132), and the convex lens (133). However, this is not limited thereto, and in other embodiments, it should be noted that the central axes of at least some of the birefringent lens (131), the concave lens (132), the convex lens (133), the beam shaping unit (140), and the imaging unit (150) may be positioned on different axes.

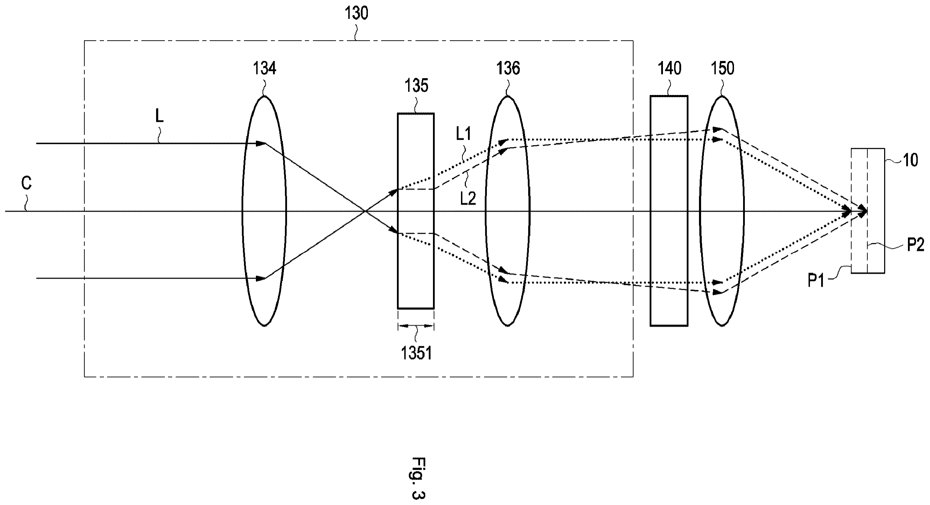

FIG. 3 is a schematic diagram of a laser processing apparatus (1) according to another embodiment of the present invention.

Referring to FIG. 3, the beam expander (130) may include a first lens (134), a birefringent plate (135), and a second lens (136). The first lens (134) may receive the laser beam (L) and refract it in a converging direction. For example, the first lens (134) may refract the laser beam (L) incident parallel to the optical axis of the first lens (134) by 45 degrees. The focal point of the laser beam (L) may be formed between the first lens (134) and the birefringent plate (135). The first lens (134) may be a convex lens.

The birefringent plate (135) may receive the laser beam (L) that has passed through the first lens (134). The laser beam (L) may be incident on the birefringent plate (135) at an incident angle within a predetermined range. For example, the predetermined range may be from 0 degrees to 90 degrees.

The birefringent plate (135) may form the first laser beam (L1) and the second laser beam (L2) from the laser beam (L). Due to the birefringent property of the birefringent plate (135), the laser beam (L) may split into the first laser beam (L1) and the second laser beam (L2) while passing through the birefringent plate (135). For example, the first laser beam (L1) may be an ordinary ray, and the second laser beam (L2) may be an extraordinary ray.

The polarization direction of the first laser beam (L1) and the polarization direction of the second laser beam (L2) may be perpendicular. For example, when the polarization direction of the laser beam (L) forms 45 degrees with the optical axis of the birefringent plate (135), the polarization direction of the first laser beam (L1) and the polarization direction of the second laser beam (L2) may be perpendicular. When the polarization direction of the first laser beam (L1) and the polarization direction of the second laser beam (L2) are perpendicular, interference between the first laser beam (L1) and the second laser beam (L2) may not occur. Therefore, energy loss due to interference between the first laser beam (L1) and the second laser beam (L2) can be prevented.

The distance between the focal points of the two beams (L1, L2) may be determined based on the thickness (1351) of the birefringent plate (135). For example, as the thickness (1351) of the birefringent plate (135) increases, the distance between the focal points of the two beams (L1, L2) may increase.

The second lens (136) may refract the first laser beam (L1) and the second laser beam (L2). The second lens (136) may converge the first laser beam (L1) and the second laser beam (L2) so that they do not diverge beyond a certain range. Accordingly, the first laser beam (L1) and the second laser beam (L2) that have passed through the second lens (136) may intersect. For example, the first laser beam (L1) and the second laser beam (L2) may intersect inside the beam expander (130).

The beam shaping unit (140) will not be described again as it has been described above with reference to FIG. 2.

The imaging unit (150) may image the two beams (L1, L2) onto the workpiece (10) respectively. The imaging unit (150) may image the first laser beam (L1) onto the first imaging plane (P1). The focal point of the first laser beam (L1) may be formed at the first imaging plane (P1). The first imaging plane (P1) may be the surface of the workpiece (10). The imaging unit (150) may image the second laser beam (L2) onto the second imaging plane (P2). The focal point of the second laser beam (L2) may be formed at the second imaging plane (P2). The second imaging plane (P2) may be inside the workpiece (10). The distance between the focal point of the first laser beam (L1) and the focal point of the second laser beam (L2) may be 10 um or more. That is, the depth of focus of the laser beam (L) may increase by 10 µm or more. Therefore, even if the depth of the workpiece (10) varies, a beam with uniform characteristics (e.g., energy, size, shape, etc.) can be irradiated onto the workpiece (10). In addition, the processing speed can be improved compared to when using a single beam. Since the two beams (L1, L2) do not interfere with each other, energy loss can also be prevented.

The central axes of the first lens (134), the birefringent plate (135), and the second lens (136) may be positioned on the same axis (C). Accordingly, a compact design of the beam expander (130) is possible. The central axes of the beam shaping unit (140) and the imaging unit (150) may be positioned on the same axis (C) as the central axes of the first lens (134), the birefringent plate (135), and the second lens (136). However, this is not limited thereto, and in other embodiments, it should be noted that the central axes of at least some of the first lens (134), the birefringent plate (135), the second lens (136), the beam shaping unit (140), and the imaging unit (150) may be positioned on different axes.

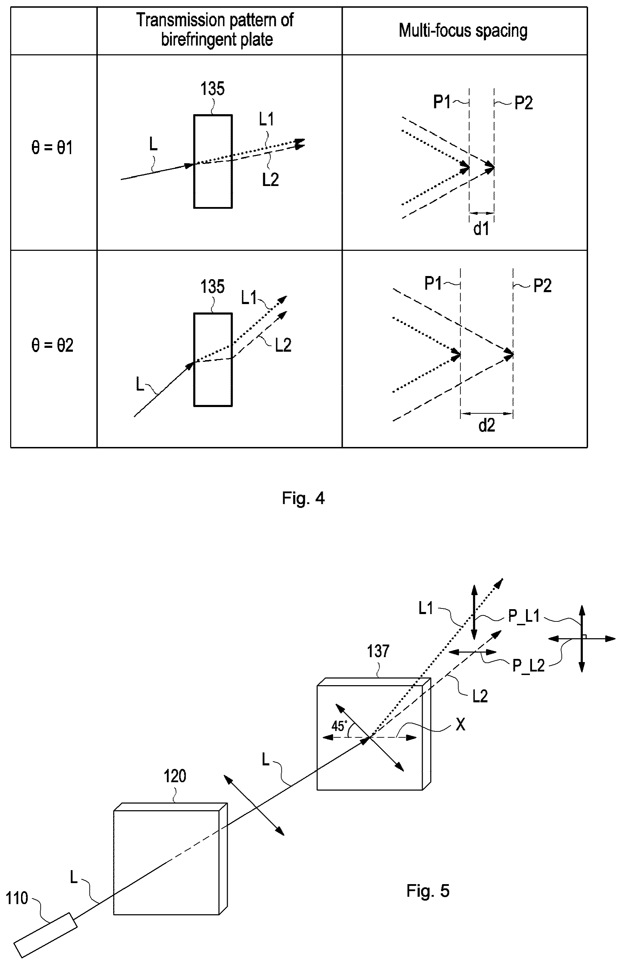

FIG. 4 is a table showing the transmission pattern and multi-focus spacing of the birefringent plate (135) according to the incident angle of the laser beam (L) according to an embodiment of the present invention.

Referring to FIG. 4, the incident angle (θ) of the laser beam (L) incident on the birefringent plate (135) may be related to the multi-focus spacing. The multi-focus spacing may mean the distance (d) between the first imaging plane (P1) and the second imaging plane (P2), that is, the depth of focus.

For example, when the incident angle (θ) is a first angle (θ1), the multi-focus spacing may be a first distance (d1). And when the incident angle (θ) is a second angle (θ2), the multi-focus spacing may be a second distance (d2). The first angle (θ1) may be smaller than the second angle (θ2), and the first distance (d1) may be smaller than the second distance (d2). That is, as the incident angle (θ) increases, the distance between the first laser beam (L1) and the second laser beam (L2) transmitted through the birefringent plate (135) increases, and accordingly, the multi-focus spacing may increase. Therefore, the incident angle (θ) may be determined based on the multi-focus spacing. For example, if the multi-focus spacing needs to be increased according to the purpose, the incident angle (θ) may be increased. Conversely, if the multi-focus spacing needs to be decreased, the incident angle (θ) may be decreased.

FIG. 5 is a diagram for explaining a method of forming the first laser beam (L1) and the second laser beam (L2) according to an embodiment of the present invention.

Referring to FIG. 5, the laser beam (L) emitted from the light source (110) may pass through the polarizing plate (120). As it passes through the polarizing plate (120), the polarization direction of the laser beam (L) may be changed. For example, the polarization direction of the laser beam (L) that has passed through the polarizing plate (120) may form 45 degrees with the optical axis (X) of the birefringent material (137). The polarizing plate (120) may be a half-wave plate.

The birefringent material (137) may birefringe the laser beam (L) to form the first laser beam (L1) and the second laser beam (L2). The birefringent material (137) may be a birefringent lens (131) or a birefringent plate (135). When the polarization direction of the laser beam (L) is 45 degrees to the optical axis (X) of the birefringent material (137), the polarization direction (P_L1) of the first laser beam (L1) and the polarization direction (P_L2) of the second laser beam (L2) may be perpendicular.

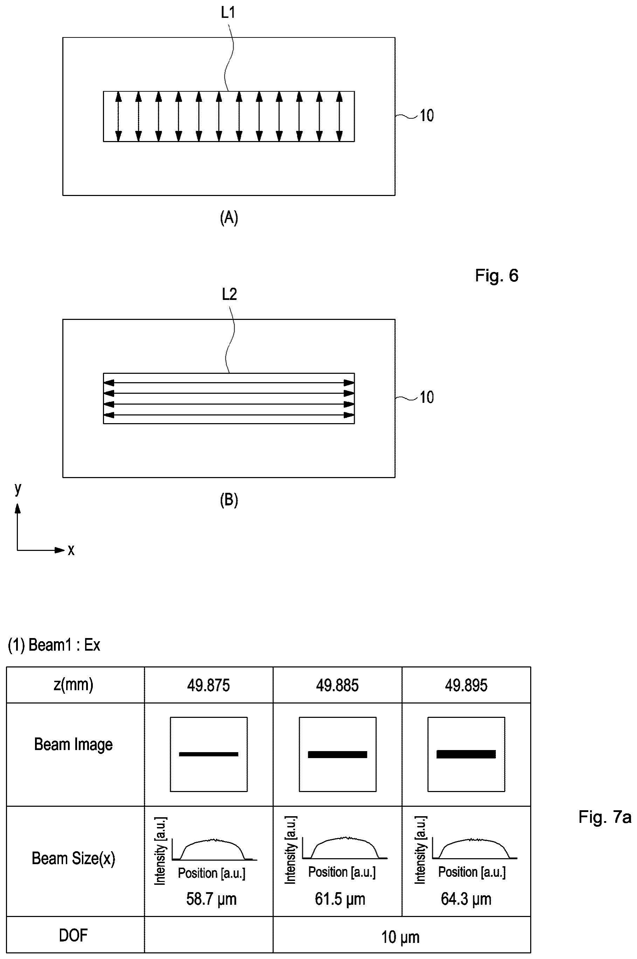

FIG. 6 shows laser beams irradiated onto a workpiece according to an embodiment of the present invention. FIG. 6(A) shows the first laser beam (L1), and FIG. 6(B) shows the second laser beam (L2).

Referring to FIG. 6, the first laser beam (L1) and the second laser beam (L2) may have a rectangular beam shape. Also, the first laser beam (L1) and the second laser beam (L2) may have beam spots of the same size. The polarization direction of the first laser beam (L1) may be perpendicular to the polarization direction of the second laser beam (L2). For example, the polarization direction of the first laser beam (L1) may be in the y-axis direction, and the polarization direction of the second laser beam (L2) may be in the x-axis direction. Meanwhile, in another embodiment, the polarization direction of the first laser beam (L1) may be in the x-axis direction, and the polarization direction of the second laser beam (L2) may be in the y-axis direction.

The length in the major axis direction of the first laser beam (L1) may be at least 9 times greater than the length in the minor axis direction. The length in the major axis direction of the second laser beam (L2) may be at least 9 times greater than the length in the minor axis direction. The size difference between the first laser beam (L1) and the second laser beam (L2) irradiated onto the workpiece (10) may be within a predetermined range.

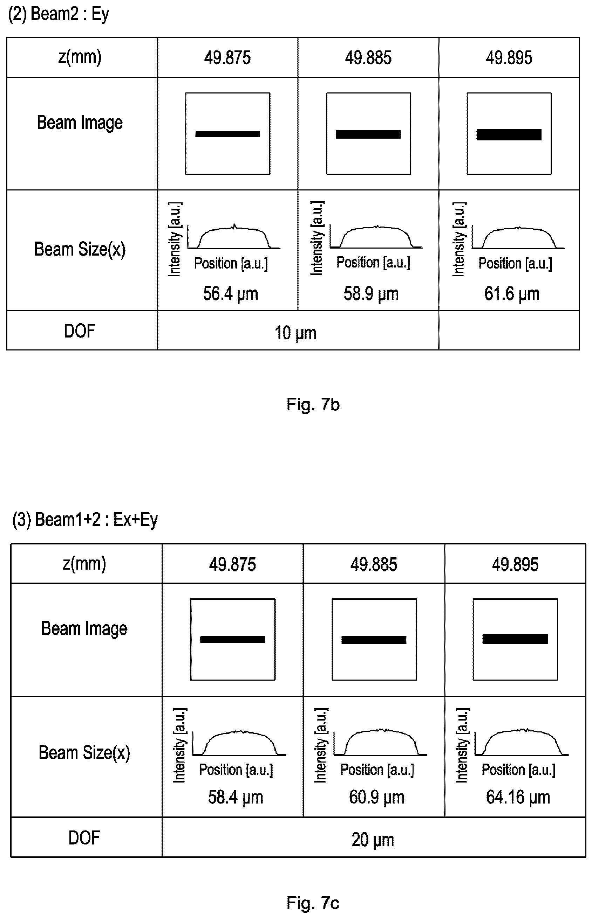

FIGS. 7a, 7b, and 7c are experimental data for laser beams according to an embodiment of the present invention. FIG. 7a is experimental data when the first laser beam polarized in the x-axis direction is irradiated onto the workpiece. FIG. 7b is experimental data when the second laser beam polarized in the y-axis direction is irradiated onto the workpiece. FIG. 7c is experimental data when both the first laser beam and the second laser beam are irradiated onto the workpiece. In FIGS. 7a, 7b, and 7c, z represents the relative distance from the focusing lens included in the imaging unit (150) in the direction toward the workpiece.

FIG. 7a shows the image, waveform, and size of the first laser beam according to the relative distance (z). As a result of observing the image and size of the first laser beam, the focal point of the first laser beam was maintained from a relative distance (z) of 49.885 um to 49.895 um. At this time, the depth of focus of the first laser beam was measured to be 10 um.

FIG. 7b shows the image, waveform, and size of the second laser beam according to the relative distance (z). As a result of observing the image and size of the second laser beam, the focal point of the second laser beam was maintained from a relative distance (z) of 49.875 um to 49.885 um. At this time, the depth of focus of the second laser beam was measured to be 10 um.

FIG. 7c shows the image, waveform, and size according to the relative distance (z) of the beam synthesized from the first laser beam and the second laser beam. The synthesis of the first laser beam and the second laser beam can be achieved by irradiating both the first laser beam and the second laser beam onto the workpiece together.

Referring to FIG. 7c, the focal point of the synthesized beam was maintained from a relative distance (z) of 49.875 um to 49.895 um. At this time, the depth of focus of the synthesized beam was measured to be 20 um. That is, when the first laser beam and the second laser beam were used together, the depth of focus doubled compared to when using only one of the first laser beam or the second laser beam. An increase in the depth of focus of the laser beam means that the depth range in which a beam of uniform size can be irradiated increases. For example, in a grooving process, the depth of the groove in the wafer can gradually increase by the laser beam. At this time, the more constant the width of the groove according to the depth of the groove, the better the processing quality can be said to be. When the depth of focus increases, a beam of uniform size can be irradiated onto the wafer surface even when the depth of the groove changes, which is advantageous for processing quality.

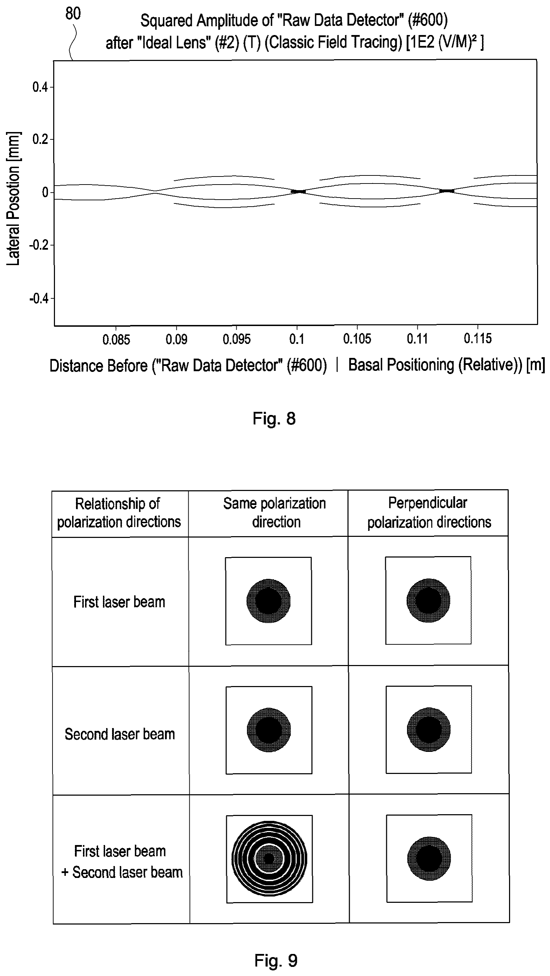

FIG. 8 is experimental data for a laser beam according to an embodiment of the present invention.

The x-axis of the graph (80) in FIG. 8 represents the depth direction of the workpiece, and the y-axis represents the lateral position. Referring to the graph (80), it can be confirmed that the focal points of the two laser beams are formed at different depths. The laser processing apparatus (1) can groove or scribe the workpiece (10) based on the multi-focus method. Alternatively, it can perform drilling or dicing. Since the laser processing apparatus (1) uses multi-beams, it has the advantages of higher processing amount per unit time and faster processing speed compared to conventional processing apparatuses using a single beam. Meanwhile, it should be noted that the units shown in FIG. 8 are merely one embodiment and the present invention is not limited to these specific numerical values.

FIG. 9 is experimental data showing images of two laser beams according to the relationship of polarization directions of the two laser beams. Specifically, FIG. 9 shows images when each laser beam is independently irradiated onto the workpiece and images when the two laser beams are irradiated together.

Referring to FIG. 9, when multi-focus is formed with a first laser beam and a second laser beam having the same polarization direction, it can be seen that interference fringes appear. On the other hand, when the polarization direction of the first laser beam is perpendicular to the polarization direction of the second laser beam, interference fringes do not appear even when multi-focus is formed. The laser processing apparatus (1) according to the present invention can use two beams (L1, L2) whose polarization directions are perpendicular to each other. Therefore, interference between the two beams (L1, L2) does not occur, and energy loss due to interference also does not occur. As a result, deterioration in processing quality may not appear.

Meanwhile, it should be noted that the laser processing apparatus (1) according to the present invention can be used not only for drilling processes but also for other processes using laser beams such as cutting or etching.

Although preferred embodiments of the present invention have been shown and described above, the present invention is not limited to the specific embodiments described above, and various modifications can be made by those skilled in the art to which the invention pertains without departing from the gist of the present invention as claimed in the claims, and these modifications should not be understood individually from the technical spirit or prospect of the present invention.

## Claims

1. A laser processing apparatus, comprising:
a light source configured to provide a laser beam;
a beam expander comprising a birefringent material configured to birefringe the laser beam to form a first laser beam polarized in a first direction and a second laser beam polarized in a second direction perpendicular to the first direction; and
a focusing lens configured to focus the first laser beam and the second laser beam onto a workpiece,
wherein the first laser beam and the second laser beam are focused at different depths from a surface of the workpiece.

2. The laser processing apparatus of claim 1, wherein the beam expander comprises:
a birefringent lens configured to receive the laser beam and form the first laser beam and the second laser beam;
a concave lens configured to refract the first laser beam and the second laser beam; and
a convex lens configured to refract the first laser beam and the second laser beam that have passed through the concave lens.

3. The laser processing apparatus of claim 2, wherein the birefringent lens is a plano-convex lens comprising a planar surface and a convex surface, and
wherein the laser beam is incident perpendicular to the planar surface.

4. The laser processing apparatus of claim 2, wherein a distance between the first laser beam and the second laser beam incident on the concave lens is smaller than a distance between the first laser beam and the second laser beam incident on the convex lens.

5. The laser processing apparatus of claim 1, wherein the beam expander comprises:
a first lens configured to receive the laser beam and refract the received laser beam in a converging direction;
a birefringent plate configured to receive the laser beam that has passed through the first lens and form the first laser beam and the second laser beam; and
a second lens configured to refract the first laser beam and the second laser beam.

6. The laser processing apparatus of claim 5, wherein a focal point of the laser beam is formed between the first lens and the birefringent.

7. The laser processing apparatus of claim 5, wherein the first laser beam and the second laser beam intersect inside the beam expander.

8. The laser processing apparatus of claim 1, further comprising:
a diffractive optical element (DOE) positioned between the beam expander and the focusing lens and configured to convert the first laser beam and the second laser beam emitted from the beam expander into a flat-top beam.

9. The laser processing apparatus of claim 1, further comprising:
a wave plate configured to change a polarization direction of the laser beam such that the polarization direction of the laser beam forms an angle of 45 degrees with an optical axis of the birefringent material.

10. The laser processing apparatus of claim 1, wherein a difference in size between the first laser beam and the second laser beam focused on the workpiece is within a predetermined range.

11. The laser processing apparatus of claim 1, wherein a distance between a first focal plane where the first laser beam is focused and a second focal plane where the second laser beam is focused is 10 um or more.

12. The laser processing apparatus of claim 1, wherein the birefringent material has positive birefringence.

13. The laser processing apparatus of claim 1, wherein the first laser beam and the second laser beam imaged on the workpiece have a rectangular beam shape with a major axis length that is at least 9 times greater than a minor axis length.

14. A method of forming a laser beam using a laser processing apparatus that includes a light source, a beam expander comprising a birefringent material, and a focusing lens, the method comprising:
directing a laser beam provided from the light source to be incident on the beam expander;
forming, by using the beam expander, a first laser beam polarized in a first direction and a second laser beam polarized in a second direction perpendicular to the first direction; and
focusing, by using the focusing lens, the first laser beam and the second laser beam onto a workpiece,
wherein the first laser beam and the second laser beam are focused at different depths from a surface of the workpiece.

15. The method of claim 14, wherein the beam expander further comprises a birefringent lens, a concave lens, and a convex lens, and
wherein the forming of the first laser beam and the second laser beam comprises:
receiving the laser beam using the birefringent lens to form the first laser beam and the second laser beam;
refracting the first laser beam and the second laser beam using the concave lens; and
refracting the first laser beam and the second laser beam that have passed through the concave lens using the convex lens.
